# EUROPÄISCHE PATENTSCHRIFT

(11) **EP 2 489 785 B1**
(45) Veröffentlichungstag und Bekanntmachung des Hinweises auf die Patenterteilung: **15.10.2014**
(21) Anmeldenummer: 11001312.5
(22) Anmeldetag: 17.02.2011
(51) Int. Cl.: E01F 7/04

(54) **Steinschlagverbauung**
Rock fall obstruction
Protection contre les chutes de pierre

(43) Veröffentlichungstag der Anmeldung: 22.08.2012
(73) Patentinhaber: Trumer Schutzbauten GesmbH, 5110 Oberndorf b. Salzburg (AT)
(72) Erfinder: Stelzer, Gernot, 5431 Kuchl (AT); Bichler, Ahren, Vancouver BC, V5R 2Z9 (CA)
(74) Vertreter: Schmitz, Hans-Werner

(56) Entgegenhaltungen:
- EP-A1- 1 911 884
- JP-A- 7 042 117

## Beschreibung

Die Erfindung betrifft eine Steinschlagverbauung gemäß dem Oberbegriff des Anspruches 1.

Eine derartige Steinschlagverbauung ist aus der EP 1 911 884 A1 bekannt. Obwohl es mit einer derartigen Steinschlagverbauung möglich ist, sicher von einem Berghang herunter fallende Teile, wie insbesondere Felsbrocken und/oder Baumstämme, zurückzuhalten, ergibt sich insofern ein Problem, als Steinschlagverbauungen relativ hoch an Berghängen angebracht werden müssen, um herab fallendes Gut möglichst früh aufhalten zu können, anderseits dies jedoch den Aufwand zum Entfernen von aufgefangenem Gut aufgrund einer schweren Zugänglichkeit erhöht.

Es ist daher Aufgabe der vorliegenden Erfindung, eine Steinschlagverbauung der im Oberbegriff des Anspruches 1 angegebenen Art zu schaffen, die einerseits das Aufnehmen hoher Energien im Netz ermöglicht und es andererseits möglich macht, das aufgefangene Gut aus dem Stützenbereich in leichter zugängliche unterhalb der Stützen liegende Bereiche zu befördern.

Die Lösung dieser Aufgabe erfolgt durch die Merkmale des Anspruches 1.

Im Einzelnen ist erfindungsgemäß vorgesehen, den unteren Rand des Fangnetzes zusammen mit dem diesen Rand führenden unteren Tragseil von den Stützen weg talseitig am Berghang zu fixieren und zu führen. Um einen Abtransport des vom Fangnetz aufgefangenen Guts geregelt möglich zu machen, ist erfindungsgemäß ferner das untere Mittelseil über Bremselemente an den Seitenankern am Berghang gespannt. Die Bremselemente sind hierbei an einem ihrer Enden am jeweiligen Seitenanker befestigt, während sie mit ihren anderen Enden über eine Seilstruppe mit dem Mittelseil verbunden sind. Schließlich ist der Seitenanker über eine Sollbruchstelle mit dem Mittelseil verbunden. Wird von einem Berghang herabstürzenden Gut vom Fangnetz aufgefangen, ergibt sich zunächst eine Krafteinwirkung auf die Sollbruchstelle des Seitenankers, die diese Sollbruchstelle zum Brechen bringt. Dadurch wiederum wird die mit dem Mittelseil und dem Bremselement verbundene Seilstruppe gespannt, was zum einen bewirkt, dass das zugeordnete Bremselement in Funktion treten kann und somit die Mittelseile die Energie durch die Krafteinwirkung des herabstürzenden Materials aufnehmen können, zum Anderen zu einem Nachgeben des Fangnetzes in dessen unterem Bereich führt. Dieses Nachgeben wiederum verhindert, dass vom Fangnetz aufgefangenes Gut im Netz hängenbleibt. Vielmehr ist es auf diese Art und Weise möglich, das vom Fangnetz in seinem Mittelbereich aufgefangene Gut gezielt auf den Berghang zurückzuwerfen, so dass es dann unter dem auf dem Berghang in Richtung Talseite verlegten Bereich des Fangnetzes bis zum unteren Rand desselben sicher abgeführt werden kann. Vorzugsweise ist hierbei der untere Rand und das untere Tragseil an Stellen verlegt, die einen leichten Abtransport des vom Fangnetz aufgefangenen Gutes möglich machen.

Es ist zwar an sich bekannt, den unteren Bereich des Fangnetzes von den Stützen entfernt talseitig am Berghang zu fixieren, jedoch haben im Rahmen der Erfindung durchgeführte Untersuchungen gezeigt, dass bei einer derartigen Konstruktion ohne das erfindungsgemäße Vorsehen der Mittelseile und deren zuvor erläuterte Spannung über Bremselemente und Sollbruchstellen das aufgefangene Material zwar nicht im Stützennahbereich abgelagert wird, jedoch die Gefahr groß ist, dass die Energie des herabstürzenden Gutes im Bereich des unteren Tragseils zu groß wird, und somit die Konstruktion versagt.

Die Unteransprüche haben vorteilhafte Weiterbildungen der Erfindung zum Inhalt.

Weitere Einzelheiten, Merkmale und Vorteile der Erfindung ergeben sich aus nachfolgender Beschreibung von Ausführungsbeispielen anhand der Zeichnung.

Es zeigt:
- Fig. 1: eine schematisch leicht vereinfachte Seitenansicht einer erfindungsgemäßen Steinschlagverbauung,
- Fig. 2: eine Draufsicht auf die Steinschlagverbauung gemäß Fig. 1, und
- Fig. 3: eine Seitenansicht einer erfindungsgemäßen Ankerplatte.

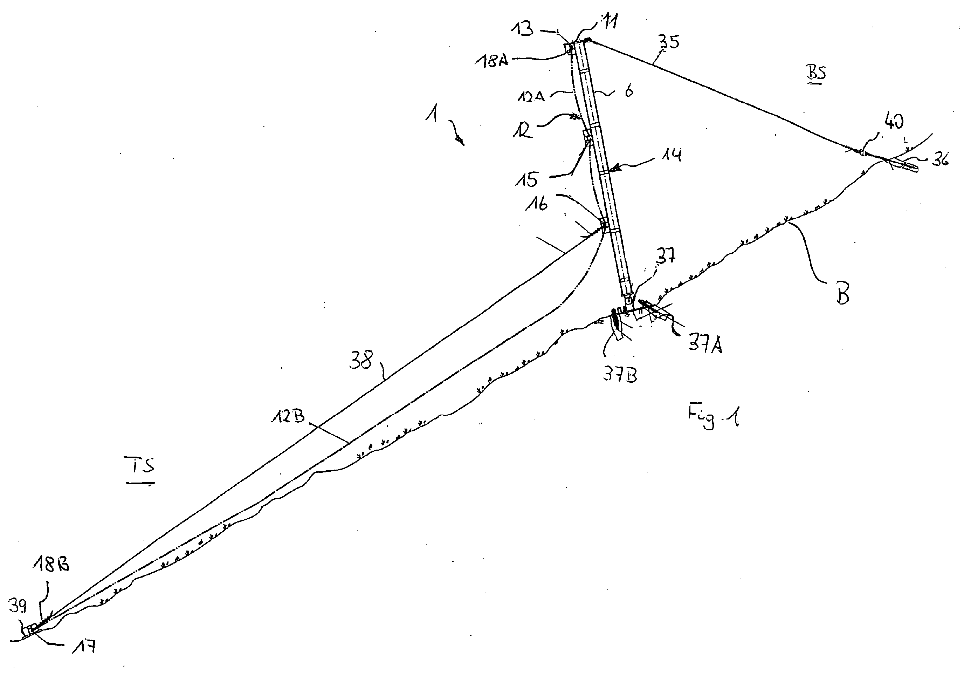

Fig. 1 zeigt eine schematisch vereinfachte Darstellung einer Steinschlagverbauung 1, die an einem Berghang B zwischen einer Bergseite BS und einer Talseite TS zu dessen Sicherung fixiert ist.

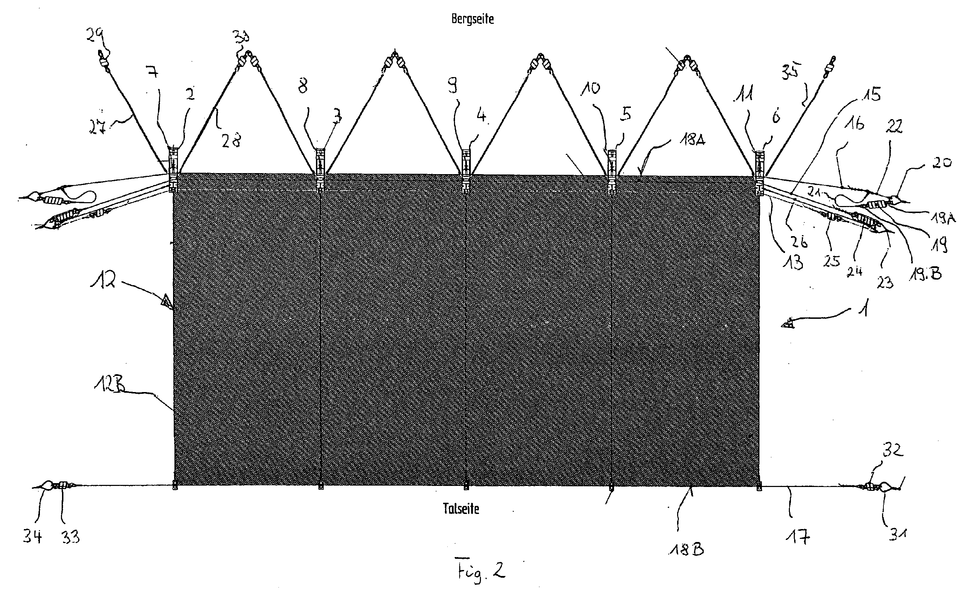

Eine Zusammenschau der Figuren 1 und 2 zeigt, dass die Steinschlagverbauung 1 ein Fangnetz 12 (Omega-Netz) aufweist, das in zwei Fangnetzbereiche 12A und 12B unterteilt ist. Der Fangnetzbereich 12A ist hierbei über eine Mehrzahl von aufrecht stehenden beabstandeten Stützen 2 bis 6 an einem Stützenmittelbereich 14 geführt.

Repräsentativ für alle identisch ausgebildeten Stützen 2 bis 6 ist in Figur 1 eine Seitenansicht der Stütze 6 dargestellt. Die Stütze 6 führt an ihrem Stützenkopf 11 ein oberes Tragseil 13 des Fangnetzbereiches 12A sowie ein oberes Mittelseil 15 und ein unteres Mittelseil 16. Durch diese Anordnung wird ein Oberrand 18A des Fangnetzbereiches 12A durch das Tragseil 13 am Stützenkopf 11 geführt, während das obere Mitteilseil 15 und das untere Mittelseil 16 den Fangnetzbereich 12A im Stützenmittelbereich 14 der Stützen 2 bis 6 führen.

Der Fangnetzbereich 12B, der über die Talseite TS des Berghanges B verlegt ist, ist mittels eines unteren Tragseiles 17 über eine Mehrzahl von am Berghang B fixierten Ankerplatten geführt. Gemäß der Darstellung der Figur 2 sind im Beispielsfalle fünf derartige Ankerplatten vorgesehen, von denen in der Seitenansicht der Figur 1 eine Ankerplatte mit der Bezugsziffer 39 gekennzeichnet ist.

Das untere Tragseil 17 ist hierbei beiderseits über Seitenanker 31 bzw. 34 am Berghang B fixiert, die jeweils mit einem Bremselement 32 bzw. 33 versehen sind, wozu auf Figur 2 verwiesen werden kann.

Wie sich aus Figur 1 ergibt, ist oberhalb des Fangnetzbereiches 12B eine talseitige Abspannung 38 angeordnet, die gemäß Figur 2 bei dieser bevorzugten Ausführungsform von fünf Abspannungsseilen gebildet wird. Die Abspannung 38 ist zur Begrenzung der Netzdeformation im Fangnetzbereich 12 B vorgesehen.

Wie sich wiederum aus einer Zusammenschau der Figuren 1 und 2 ergibt, sind die Stützen 2 bis 6 an ihren jeweiligen Stützenköpfen 7 bis 11 jeweils mittels zweier bergseitiger Rückhalteseile an bergseitigen Ankern geführt. In Figur 2 sind hierbei repräsentativ für sämtliche bergseitige Rückhalteseile und Anker die Rückhalteseile 27 und 28 der Stütze 2 mit den jeweiligen Bezugsziffern gekennzeichnet. Die bergseitigen Anker sind mit den Bezugszeichen 29 und 30 gekennzeichnet.

In der Seitenansicht der Figur 1 ist das bergseitige Rückhalteseil 35 mit seinem zugeordneten bergseitigen Anker 36 und einem Bremselement 40 verdeutlicht. Da im Beispielsfalle fünf Stützen 2 bis 6 vorgesehen sind, ergibt sich mithin eine Gesamtanzahl von zehn derartiger bergseitiger Rückhalteseile mit zugeordneten bergseitigen Ankern, wie sich dies aus Figur 2 im Einzelnen erschließt.

Bei einer weiteren Ausführungsform können diese bergseitigen Rückhalteseile weggelassen werden, so dass die Anordnung der Stützen und Grundplatten lediglich eine starre Verbindung ist.

Zur Vervollständigung der Beschreibung der Stützenanordnung ist noch darauf hinzuweisen, dass die Stützen 2 bis 6 jeweils an ihrem Stützenfuß über eine Grundplatte 37 am Berghang gelagert und über jeweilige zugeordnete Zuganker 37A und Druckanker 37B fixiert sind. Hierzu ist auf Figur 1, dortige Bezugszeichen 37 (Grundplatte), 37A (Zuganker) und 37B (Druckanker) zu verweisen.

Aus der Darstellung der Figur 2 erschließt sich ferner, dass das untere Mittelseil 16 an seinen beiden Enden jeweils durch eine identisch aufgebaute Anordnung von Seitenankern, Seilstruppen und Bremselementen geführt ist. Das gleiche trifft für das obere Mittelseil 15 zu, so dass repräsentativ für diese Anordnungen diejenigen nachfolgend beschrieben werden, die auf der rechten Seite der Figur 2 mit den entsprechenden Bezugsziffern versehen sind.

Bei dieser Ausführungsform sind zwei Mitteilseile 15, 16 angeordnet, es können aber auch vier oder sechs oder eine andere Anzahl von Mitteilseilen vorgesehen werden. Außerdem kann die Konstruktion auch Mittelseile aufweisen, die doppelt geführt sind.

Demgemäß ist das untere Mittelseil 16 über mit Bremselementen 19 versehenen Seitenankern 20 am Berghang B gespannt. Das Bremselement 19 ist hierbei an einem seiner Enden 19A am Seitenanker 20 fixiert. An seinem anderen Ende 19B ist das Bremselement 19 über eine Seilstruppe 21 mit dem Mittelseil 16 verbunden. Figur 2 verdeutlicht ferner, dass die Seitenanker 20 jeweils über eine Sollbruchstelle 22 mit dem Mittelseil 16 verbunden sind.

Das obere Mitteilseil 15 ist über eine Seitenabspannung 26 und ein Bremselement 24 an einem Seitenanker 23 fixiert, der wiederum am Berghang B befestigt ist.

Durch diese Anordnung ergibt sich die Möglichkeit, aufzufangendes Gut, wie z.B. Felsbrocken, die sich auf der Bergseite BS des Berghanges B von diesem lösen, durch den im Stützenmittelbereich 14 geführten Fangnetzabschnitt 12A sicher abzubremsen und aufzufangen. Damit das aufgefangene Gut nicht im Fangnetzbereich 12A hängen bleibt, ergibt sich durch die Krafteinwirkung beim Auffangen des Netzes ein Bruch der Sollbruchstelle 22, was die Seilstruppe 21 spannt. Dadurch kann das Bremselement 19 in Wirkung treten und das aufgefangene Gut kann dadurch, dass der Fangnetzbereich 12A in seinem unteren Teil nachgibt, auf den Berghang B zurückgeworfen werden. Danach kann das abgebremste Gut unterhalb des Fangnetzbereiches 12B bis zu dessen unteren Rand 18B auf der Talseite TS abgefördert werden. Im Bereich des unteren Randes 18B wird das aufgefangene Gut endgültig abgefangen und kann von diesem Bereich aus dem Fangnetz 12 wesentlich einfacher entnommen werden, als wenn das aufgefangene Gut im Fangnetzbereich 12A des Fangnetzes 12 hängengeblieben wäre.

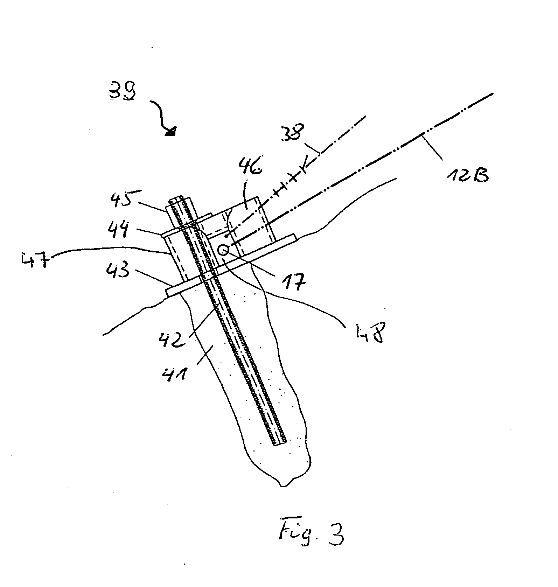

Repräsentativ für die Mehrzahl der in Figur 2 sichtbaren Anker ist der Anker 39 in Figur 3 im Detail dargestellt. Der Anker 39 weist eine Ankerplatte 43 auf, auf der eine zylindrisch ausgebildete, also mit gerundeten Führungsflächen versehene Seilführung 46 angeordnet ist. Die Seilführung 46 begrenzt mit einer Pfahlführung 47 eine Ausnehmung 48, durch die das untere talseitige Tragseil 17 und die untere Abspannung 38 geführt wird.

Durch die Pfahlführung 47 ist ein Mikropfahl 42 hindurchgeführt, der bergseitig in einem in den Berghang B eingeführten Ankermörtel 41 eingreift. Auf der Pfahlführung 47 ist eine Beilage 44 angeordnet und der Mikropfahl 42 ist mittels einer Verschraubung 45 fixiert.

Neben der voranstehenden schriftlichen Offenbarung wird hiermit explizit auf deren zeichnerische Darstellung in den Figuren 1 bis 3 verwiesen.

Es ist nachzutragen, dass sämtliche Bremselemente mit Sollbruchstellen versehen sind, die eine Verformung der Bremselemente erst nach Überschreiten einer gegebenen Laststufe erlauben. Dadurch ist ein Austausch verformter Bremselemente erst bei Steinschlagereignissen mit höheren Energien erforderlich, was über die Nutzungsdauer Wartungskosten spart.

### Bezugszeichen

- 1: Steinschlagverbauung
- 2 bis 6: aufrechte Stützen
- 7 bis 11: Stützenkopf
- 12: Fangnetz (Omega-Netz)
- 12A, 12B: Fangnetzbereiche
- 13: oberes Tragseil
- 14: Stützenmittelbereich
- 15: oberes Mittelseil
- 16: unteres Mittelseil
- 17: unteres talseitiges Tragseil
- 18A: oberer Rand des Fangnetzes
- 18B: unterer Rand des Fangnetzes
- 19: Bremselement unteres Mittelseil
- 19A, 19B: Ende des Bremselements
- 20: Seitenanker
- 21: Seilstruppe
- 22: Sollbruchstelle
- 23: Seitenanker Tragseil oben, oberes Mittelseil und Seitenabspannung
- 24: Bremselement oberes Mittelseil
- 25: Bremselement oberes Tragseil
- 26: Seitenabspannung
- 27, 28: bergseitige Rückhalteseile des Stützenkopfes
- 29, 30: bergseitiger Anker
- 31, 34: Seitenanker Tragseil unten
- 32, 33: Bremselement Tragseil
- 35: bergseitiges Rückhalteseil
- 36: bergseitiger Anker
- 37: Grundplatte
- 37A: Zuganker
- 37B: Druckanker
- 38: talseitige Abspannung
- 39: talseitiger Anker
- 40: Bremselement
- 41: Ankermörtel
- 42: Mikrofahl
- 43: Ankerplatte
- 44: Beilage
- 45: Verschraubung
- 46: Seilführung
- 47: Pfahlführung
- 48: Ausnehmung
- B: Berghang
- BS: Bergseite
- TS: Talseite

## Patentansprüche

1. Steinschlagverbauung (1) zwischen einer Bergseite (BS) und einer Talseite (TS) eines Berghanges (B)
- mit einer Mehrzahl aufrechter beabstandeter Stützen (2 bis 6), die jeweils einen Stützenkopf (7 bis 11) aufweisen,
- mit einem Fangnetz (12),
- mit einem oberen Tragseil (13), das einen oberen Rand (18A) des Fangnetzes (12) an den Stützenköpfen (7 bis 11) der Stützen (2 bis 6) führt,
- mit einem oberen Mittelseil (15) und einem unteren Mittelseil (16), die das Fangnetz (12) an einem Stützenmittelbereich (14) der Stützen (2 bis 6) führen,
- mit einem unteren Tragseil (17) zur Führung eines unteren Randes (18B) des Fangnetzes (12),
**dadurch gekennzeichnet,**
- **dass** das untere Tragseil (17), getrennt von den Stützen (2 bis 6), talseitig der Stützen (2 bis 6), zusammen mit dem unteren Rand (18B) des Fangnetzes (12) am Berghang (B) geführt ist, und
- **dass** das untere Mittelseil (16) über mit Bremselementen (19) versehene beitenanker (20) am Berghang (B) gespannt ist,
- wobei das Bremselement (19) an seinem einen Ende (19A) am Seitenanker (20) und an seinem anderen Ende (19B) über eine Seilstruppe (21) mit dem Mittelseil (16) verbunden ist, und
- wobei der Seitenanker (20) über eine Sollbruchstelle (22) mit dem Mittelseil (16) verbunden ist.

2. Steinschlagverbauung (1) gemäß Anspruch 1, **dadurch gekennzeichnet, dass** die Sollbruchstelle (22) als Seilstruppe oder Seil ausgebildet ist.

3. Steinschlagverbauung (1) gemäß Anspruch 1 oder 2, **gekennzeichnet durch** eine talseitige Abspannung (38).

4. Steinschlagverbauung (1) gemäß einem der Ansprüche 1 bis 3, **dadurch gekennzeichnet, dass** ein talseitiger Anker (39) mit einer gerundeten Seilführung (46) versehen ist.

5. Steinschlagverbauung (1) gemäß Anspruch 4, **dadurch gekennzeichnet, dass** die Seilführung (46) als zylindrisches Rohr ausgebildet ist, das auf einer Ankerplatte (43) fixiert ist.

6. Steinschlagverbauung (1) gemäß Anspruch 4 oder 5, **dadurch gekennzeichnet, dass** der Anker (39) ferner eine Pfahlführung (47) aufweist.

## Claims

1. A rock fall obstruction (1) between an uphill side (BS) and a downhill side (TS) of a mountain slope (B), comprising:
- a plurality of upright and spaced supports (2 to 6), each having a support head (7 to 11),
- a catch net (12),
- an upper support cable (13) guiding an upper edge (18A) of the catch net (12) at the support heads (7 to 11) of the supports (2 to 6),
- an upper central cable (15) and a lower central cable (16) guiding the catch net (12) in a central support area (14) of the supports (2 to 6),
- a lower support cable (17) for guiding a lower edge (18B) of the catch net (12),
**characterized in**
- **that** the lower support cable (17) is guided on the mountain slope (B) together with the lower edge (18B) of the catch net (12) on the downhill side of the supports (2 to 6) and separated from said supports (2 to 6), and
- **that** the lower central cable (16) is tensioned using side anchors (20) provided with braking elements (19) on the mountain slope (B),
- wherein the braking element (19) is connected at its one end (19A) to the side anchor (20) and at its other end (19B) to the central cable (16) via a cable loop (21), and
- wherein the side anchor (20) is connected to the central cable (16) via a predetermined breaking point (22).

2. The rock fall obstruction (1) according to claim 1, **characterized in that** the predetermined breaking point (22) is configured as a cable loop or cable.

3. The rock fall obstruction (1) according to claim 1 or 2, **characterized by** a downhill bracing system (38).

4. The rock fall obstruction (1) according to any one of claims 1 to 3, **characterized in that** a downhill anchor (38) is provided with a rounded cable guide unit (46).

5. The rock fall obstruction (1) according to claim 4, **characterized in that** the cable guide unit (46) is configured as a cylindrical tube fixed onto an anchor plate (43).

6. The rock fall obstruction (1) according to claim 4 or 5, **characterized in that** the anchor (39) also includes a pile guide (47).

## Revendications

1. Protection contre les chutes de pierre (1) entre un côté montagne (BS) et un côté vallée (TS) d'un versant de montagne (B), comprenant
- une pluralité de montants verticaux (2 à 6) espacés, lesquels présentent respectivement une tête de montant (7 à 11),
- un filet de sécurité (12),
- un câble porteur supérieur (13), qui guide un bord supérieur (18A) du filet de sécurité (12) au niveau des têtes de montants (7 à 11) des montants (2 à 6),
- un câble central supérieur (15) et un câble central inférieur (16), qui guident le filet de sécurité (12) au niveau d'une zone centrale de montant (14) des montants (2 à 6),
- un câble porteur inférieur (17) servant à guider un bord inférieur (18B) du filet de sécurité (12),
**caractérisée en ce**
- **que** le câble porteur inférieur (17), séparé des montants (2 à 6), est guidé, côté vallée des montants (2 à 6), conjointement avec le bord inférieur (18B) du filet de sécurité (12), au niveau du versant de montagne (B), et
- en ce que le câble central inférieur (16) est tendu par l'intermédiaire d'ancres latérales (20) pourvues d'éléments de freinage (19) au niveau du versant de montagne (B),
- sachant que l'élément de freinage (19) est relié par l'une de ses extrémités (19A) à l'ancre latérale (20) et par son autre extrémité (19B) au câble central (16) par l'intermédiaire d'une élingue (21), et
- sachant que l'ancre latérale (20) est reliée au câble central (16) par l'intermédiaire d'un emplacement de rupture prévue (22).

2. Protection contre les chutes de pierre (1) selon la revendication 1, **caractérisée en ce que** l'emplacement de rupture prévue (22) est réalisé sous la forme d'une élingue ou d'un câble.

3. Protection contre les chutes de pierre (1) selon la revendication 1 ou 2, **caractérisée par** un haubanage (38) côté vallée.

4. Protection contre les chutes de pierre (1) selon l'une quelconque des revendications 1 à 3, **caractérisée en ce qu'**une ancre côté vallée (39) est pourvue d'un système de guidage de câble (46) arrondi.

5. Protection contre les chutes de pierre (1) selon la revendication 4, **caractérisée en ce que** le système de guidage de câble (46) est réalisé sous la forme d'un tuyau cylindrique, qui est fixé sur une plaque ancrage (43).

6. Protection contre les chutes de pierre (1) selon la revendication 4 ou 5, **caractérisée en ce que** l'ancre (39) présente en outre un système de guidage de piquet (47).
